# FASCICULE DE BREVET EUROPEEN

(11) **EP 1 711 441 B1**
(45) Date de publication et mention de la délivrance du brevet: **15.04.2015**
(21) Numéro de dépôt: 05717684.4
(22) Date de dépôt: 24.01.2005
(51) Int. Cl.: C03B 18/18, C03B 32/02

(54) **FABRICATION DE VERRE PLAT PAR FLOTTAGE SANS POINT FIXE**
FLACHGLASHERSTELLUNG MITTELS FLOTATION OHNE FIXPUNKT
FLAT GLASS PRODUCTION BY MEANS OF FLOTATION WITH NO FIXED POINT

(30) Priorité: 28.01.2004 FR 0400788
(43) Date de publication de la demande: 18.10.2006
(73) Titulaire: SAINT-GOBAIN GLASS FRANCE, 92400 Courbevoie (FR)
(72) Inventeur: COBO HEDILLA, Angel-F., Saint-Gobain Glass Espana, E-33400 Aviles (ES); GOULAS, Catherine, Saint-Gobain Recherche, F-93300 Aubervilliers (FR); LEMAILLE, Maurice, Saint-Gobain Glass Espana, E-33400 Aviles (ES)
(74) Mandataire: Colombier, Christian
(86) Numéro de dépôt international: PCT/FR2005/050041
(87) Numéro de publication internationale: WO 2005/073138

(56) Documents cités:
- CN-A- 1 160 687
- CN-A- 1 367 149
- FR-A- 2 064 357
- US-A- 3 539 320
- US-A- 3 684 475
- US-A- 3 843 345
- US-A- 4 115 091
- US-A1- 2002 023 463
- US-B1- 6 376 084
- PATENT ABSTRACTS OF JAPAN vol. 2000, no. 13, 5 février 2001 (2001-02-05) -& JP 2000 281365 A (NIPPON SHEET GLASS CO LTD), 10 octobre 2000 (2000-10-10)

## Description

L'invention concerne la fabrication de verre plan par flottage, et notamment de vitrocéramique plane.

Les vitrocéramiques sont des matières riches en silice comprenant au moins une phase cristalline et obtenues après un traitement thermique de céramisation à partir d'un verre précurseur (ou verre-mère). Les vitrocéramiques présentent un très faible coefficient de dilatation linéaire, généralement inférieur à 15.10⁻⁷ K⁻¹. La vitrocéramique peut comprendre au moins 50% en masse de silice. Une famille importante de vitrocéramique est celle comprenant à la fois SiO₂, Al₂O₃ et Li₂O pour laquelle le traitement de céramisation mène à des cristaux de bêta eucryptite ou bêta spodumène ou bêta quartz.

Ces vitrocéramiques, translucides ou opaques, trouvent une utilité notamment comme plaques de cuisson ou plaques anti feu, et plus généralement dans des utilisations nécessitant un verre à très faible coefficient de dilation. Les vitrocéramiques présentent cependant l'inconvénient d'avoir une forte tendance à la dévitrification à chaud, ce qui entraîne habituellement de nombreuses interventions de maintenance des installations de formage. En effet, les plaques ou feuilles de vitrocéramiques sont habituellement réalisées par laminage entre des rouleaux métalliques et des dépôts de dévitrifications abîment la surface desdits rouleaux. Ceux-ci doivent donc être périodiquement rectifiés (même tous les 2 à 3 jours) voire remplacés. Les installations de formage des vitrocéramiques sont donc habituellement conçues pour rendre aisées les interventions de maintenance, ce qui implique une grande accessibilité aux rouleaux de laminage, au cours même de la fabrication. Il est ainsi impensable pour l'homme du métier de former les vitrocéramiques dans des installations gigantesques dont le coeur reste inaccessible en cours de fonctionnement comme c'est le cas des installations de flottage du verre. En effet ces installations font plusieurs dizaines de mètres voire plusieurs centaines de mètres de longueur pour plusieurs mètres de largeur et les temps de transition à la mise en route et à l'arrêt sont considérables. De telles installations doivent donc fonctionner en permanence et un arrêt pour maintenance est catastrophique et rédhibitoire. Les installations classiques de formage des vitrocéramiques par lamination entre rouleaux ne permettent par ailleurs pas de réaliser des feuilles très larges. La largeur est limitée à moins de 700 mm. On a cependant besoin aujourd'hui de plaques de plus grandes largeurs. De même, ce procédé de laminage ne permet pas la réalisation de feuilles très fines à l'épaisseur inférieure à 3 mm.

La demanderesse a effectivement pu constater que le flottage d'une vitrocéramique ne pouvait pas être réalisée comme on le fait habituellement pour un verre classique du type silicosodocalcique. En effet, une dévitrification ne manque pas de se produire dans la zone où le verre est coulé sur le bain métallique de flottage. Rappelons que dans la fabrication d'un ruban de verre flotté en vue de la réalisation de feuilles de verre plat, du verre fondu est déversé sur un bain de métal fondu, généralement d'étain ou d'un alliage à prédominance d'étain, où il forme ledit ruban continu qui se refroidit progressivement et est extrait à l'aide de rouleaux extracteurs qui l'acheminent dans un four de recuisson appelé étenderie. La zone couvrant le ruban de verre lorsque celui-ci défile sur le bain de métal fondu est encombrée de systèmes de chauffage et de systèmes de refroidissement qui sont prévus pour conditionner la température et plus précisément la viscosité du verre pour permettre son étirage à l'épaisseur voulue puis son figeage.

La zone centrale de la matière flottée en fusion située sur l'axe longitudinal de l'installation de flottage ("float") et le plus en amont sur le bain de métal est en fait une zone ou la vitesse de la matière flottée est faible ou nulle. Ce type de zones paraît favorable à la dévitrification, en particulier quand il s'agit de vitrocéramique. La dévitrification entraîne la formation de cristaux s'accumulant au même endroit et nécessitant l'arrêt de la fabrication.

Selon l'invention, on a remédié à ce problème en concevant une installation de flottage dénuée de points fixes pour la matière fondue flottée. La vitesse de la matière fondue flottée n'est donc nulle en aucun de ses points.

Le US3843345 enseigne le flottage d'un verre classique sur un bain de métal, mais sans déversement (ou chute) du verre. A l'endroit du passage du verre sur le métal, il existe un point triple (en fait une ligne) verre/métal/réfractaire qui est forcément fixe. De plus, la vitesse du verre aux bords semble être nulle. Ce dispositif n'est de ce fait pas adapté au verre précurseur de vitrocéramique.

Le US3684475 enseigne le passage d'une bande de verre laminée sur un bain de métal. Il ne s'agit donc pas là d'un déversement de verre fondu. Un tel laminage à ces températures très élevées ne permet pas l'obtention de feuilles de verre larges et/ou épaisses.

Le US200210023463 enseigne une composition particulière de vitrocéramique susceptible d'être flottable sans cristallisation superficielle.

L'abrégé du JP2000281365 enseigne la recirculation de l'étain de l'aval vers l'amont par les bords du bain de métal d'une enceinte de flottage.

Comme autres documents, on peut citer les US3539320, US4115091, US3718450.

Selon l'invention, on peut utiliser une installation de flottage classique procurant habituellement un point ou une zone de verre à vitesse faible ou nulle à l'endroit du déversement du verre précurseur, mais en aménageant la coulée également d'un métal fondu en cet endroit de manière à supprimer tout point fixe pour le verre. La coulée du métal fondu est aménagée de façon à constituer une zone en mouvement pour le verre. Du métal fondu est introduit aux points de flottage qui seraient fixes pour le verre en l'absence d'introduction. Ce métal fondu est de préférence de même nature que celui du bain de flottage et va se mélanger avec lui. Cette coulée de métal fondu entraîne la matière fondue en cette zone critique et empêche qu'elle ne soit fixe. Ainsi, toute la matière verrière fondue introduite dans l'installation de flottage est entraînée vers la sortie de celui-ci, sans stagnation en aucun endroit, et donc sans dévitrification en aucun endroit, ce qui est particulièrement avantageux lorsque l'on souhaite fabriquer de la vitrocéramique. La coulée du métal fondu destinée à éviter les points fixes, est réalisée de façon symétrique par rapport à l'axe longitudinal de l'installation de flottage de manière à ne pas perturber la symétrie d'écoulement du verre par rapport à cet axe. Cette coulée est de préférence réalisée sur une certaine largeur correspondant par exemple à au moins 50% de la largeur de la lèvre de coulée du verre, voire au moins 80% de la largeur de la lèvre de coulée du verre. Il peut donc s'agir d'un véritable rideau ou cascade sur une importante largeur de l'installation. De préférence, le métal est coulé de façon à ne pas provoquer de turbulence dans le bain de métal. Ainsi, on préfère le déverser sur un plan incliné de matière réfractaire (par exemple en silimanite), ledit plan incliné aboutissant au bain de métal. De cette façon, le métal est déversé dans le bain de manière douce.

Selon un mode de réalisation, pour éviter l'excès de métal fondu du fait de la coulée de métal en tête de l'installation, du métal fondu est soutiré d'au moins un point plus en aval du même bain de métal. Avantageusement, c'est au moins en partie ce même métal soutiré qui est coulé en tête du bain. Dans ce cas, le métal circule en fait au moins partiellement en boucle d'amont en aval et vice-versa. Cette recirculation peut également servir à limiter, voire empêcher les recirculations naturelles à l'intérieur du bain pouvant perturber le formage. De préférence, on soutire et réintroduit le métal fondu de manière symétrique par rapport à l'axe longitudinal de l'installation, de manière à ne pas perturber le fonctionnement symétrique de l'ensemble. Ainsi, si l'on prélève du métal d'un coté en aval de l'installation, on prélève également et selon le même débit, du métal de l'autre côté de l'installation et à l'endroit symétrique du premier par rapport à l'axe longitudinal de l'installation. Dans ce cas, on peut dire que l'on prélève du métal fondu sur les parties latérales du bain de métal fondu et de manière symétrique par rapport à l'axe longitudinal. Il en est de même pour la réintroduction, étant entendu qu'en général celle-ci est réalisée par une canalisation dont l'axe se trouve sur l'axe longitudinal de l'installation et déverse du métal au moins au point le plus en amont du verre et sur l'axe longitudinal. Comme déjà dit, cette canalisation de déversement du métal est de préférence assez large par rapport à la largeur du bain de métal en cet endroit. Cette symétrie du système de circulation du métal fondu peut être assurée par l'usage de pompes calibrées. Le débit de ces pompes peut généralement être réglé par une pression d'air qui les alimente. On cherche un réglage assurant une symétrie des températures et un tirage sans battement de la feuille de verre.

Selon l'invention, du métal fondu est introduit en continu au point de flottage du verre le plus amont et situé sur l'axe longitudinale du bain. Ce métal fondu introduit peut notamment provenir au moins partiellement d'un point de prélèvement du même bain situé plus en aval.

La débit de métal déversé en amont dépend de la taille de l'installation. Le débit de métal est suffisant pour empêcher la formation de point fixe pour le verre. Le débit en ce point le plus en amont est généralement compris entre 0,05 et 5 litres par seconde.

Dans un mode de réalisation, la composition vitreuse étalée sur le bain de métal est un verre précurseur de vitrocéramique. La structure particulière de vitrocéramique est réalisée par un traitement thermique spécifique (dit de céramisation) postérieur au formage en feuille/plaque et même généralement postérieur à la découpe longitudinale et transversale du ruban flotté. On peut également appeler "verre mère", ce verre précurseur de vitrocéramique. Par simplification, on peut l'appeler simplement « verre » dans le cadre de la présente demande.

L'invention concerne un procédé pour la fabrication d'un ruban de verre notamment précurseur de vitrocéramique, flotté, selon lequel le ruban, formé sur un bain de métal fondu, progresse en flottant sur ce bain, ce ruban étant retiré du bain lorsqu'il est suffisamment solidifié. L'invention permet la fabrication d'épaisseurs variées de verre et concerne plus spécifiquement la fabrication d'un ruban mince, et notamment d'épaisseur inférieure à 3 mm.

Plus spécifiquement, l'invention concerne un procédé pour la fabrication de verre plat comprenant le flottage en continu d'un verre fondu sur un bain de métal fondu dans une installation de flottage, ledit verre flotté étant déversé à l'état fondu sur le métal fondu et formant progressivement un ruban défilant sur ledit bain de métal sans présenter aucun point fixe dans l'installation, du métal fondu étant introduit dans l'installation de façon à ce qu'il constitue une zone de réception en mouvement pour le verre fondu.

L'épaisseur du ruban est déterminée par l'effort de traction exercé sur lui d'une part par les rouleaux extracteurs et éventuellement d'autre part par l'action de rouleaux de bord moletés, appelés « top roll », qui agissent sur les bords supérieurs du ruban. En effet, pour une tirée donnée, c'est à dire pour une quantité de verre sortant du four par unité de temps donnée, l'épaisseur du ruban de verre flotté est fonction de la vitesse dudit ruban dans l'étenderie et de la largeur de celui ci.

Au moment ou le verre est déversé sur le métal, à l'entrée de l'enceinte de flottage, le verre est assez fluide pour se répandre sur la surface de métal sous l'effet de son propre poids. Avantageusement, la température est à cet endroit telle que la viscosité dynamique du verre soit comprise entre 3 et 4,5 poises. Dans le cas d'un verre précurseur de vitrocéramique, la température du verre est, à cet endroit, généralement comprise entre 1300 et 1450°C.

Durant le défilement du ruban de verre sur le bain de métal fondu, ledit ruban va donc subir un étirage pour diminuer son épaisseur. Cet étirage est généralement obtenu pour des tirées comprises entre 500 et 600 tonnes par jour avec des vitesses du ruban comprises entre 15 et 30 mètres à la minute, pour des épaisseurs classiques de l'ordre de 2 à 5 mm. De telles tirées et vitesses du ruban de verre défilant sur le bain de métal fondu provoquent par ailleurs sous ledit ruban un courant d'étain dirigé vers l'extrémité de sortie du bain plus froide, que l'on peut qualifier de courant aval. Le métal entraîné par le ruban suivant ce courant aval vient buter sur la paroi de sortie du bain puis par réflexion tend à former un courant de retour dirigé vers l'amont du bain, que l'on peut qualifier de courant amont. Ce courant amont peut être particulièrement important entre les bords du ruban de verre et les parois latérales du bain. Ce courant amont, plus froid, vient se mélanger au courant aval provoquant des perturbations comme des turbulences et un apport de métal à une température inférieure à celle du métal du courant aval. Il apparaît alors notamment selon des zones transversales des variations de température élevées notamment dans la zone d'étirage où le verre est particulièrement sensible à ces variations de température. Ces différences de température sont notamment néfastes car elles modifient localement la viscosité du verre et de ce fait, l'étirage peut ne pas être homogène. Il s'ensuit des déformations du ruban de verre et également une instabilité latérale dudit ruban de verre qui se déplace périodiquement d'un côté à l'autre du bain. Une telle instabilité peut notamment perturber les températures au niveau de l'étenderie et par-là avoir un effet néfaste sur le recuit pouvant même aller jusqu'à engendrer des casses.

Pour palier les inconvénients découlant de ce courant amont, le FR 2 254 527 enseigne, dans le cas d'un verre silicosodocalcique, la disposition de barrières transversales sous le ruban de verre, afin d'empêcher le courant amont réfléchi par la paroi de sortie du bain de se mélanger avec le courant aval dans la zone d'étirage. Pour ce faire, un premier barrage est prévu sous le ruban de verre au niveau de l'extrémité aval de la zone d'étirage ; ce barrage ne laisse qu'une partie du courant aval s'écouler sous le ruban et contraint le courant amont à passer le long des bords dudit ruban. Un second barrage espacé du premier vers l'amont et situé dans la région d'accélération maximale du verre, agit de la même façon à ce second endroit ne laissant qu'une partie du courant aval s'écouler sous le ruban de verre et contraignant le courant amont à passer le long des bords dudit ruban. Le FR 2 372 122 propose par ailleurs d'associer au précédent barrage transversal des déflecteurs fixes situés en amont du barrage et qui ont pour fonction d'intercepter les courants de métal longeant les parois latérales du bain.

Selon un mode de réalisation de l'invention, le bain de métal est équipé d'un ou plusieurs de ces barrages et le cas échéant d'un ou plusieurs de ces déflecteurs fixes, limitant l'intensité du courant amont.

Selon un mode de réalisation de l'invention le ruban défile sur un bain de métal fondu, une partie du métal fondu étant prélevée en extrémité avale du bain et réintroduite en amont dans le bain. Selon une variante, la quantité de métal fondu prélevée correspond sensiblement à la quantité de métal fondu qui serait entraînée par le courant amont précité, c'est-à-dire par le courant créé par la réflexion sur la paroi de sortie du bain du courant de métal fondu qui accompagne le défilement du ruban de verre. Selon une variante, le procédé selon l'invention permet d'éliminer quasi-totalement le courant de retour dans le bain et donc les perturbations qui s'ensuivent, notamment en termes de turbulences. De plus, et en combinaison avec cet effet, le métal fondu étant coulé en amont du bain de façon à constituer une zone de réception en mouvement pour le verre, il empêche toute dévitrification dans la zone la plus en amont du verre flotté.

Le métal fondu peut subir un traitement thermique avant sa réintroduction dans le bain. En effet, la température du métal prélevé est de préférence amenée à une température correspondant à celle du métal dans la zone du bain où le métal prélevé va être réintroduit. Il est ainsi possible non seulement de prévenir les turbulences mais en outre de ne pas provoquer de variations de température à l'endroit de réintroduction du métal.

Le prélèvement du métal fondu peut être effectué sur la partie latérale du bain et de préférence de manière symétrique de chaque côté. Le prélèvement du métal fondu peut être effectué à la surface du bain. Le métal fondu peut également être prélevé par le fond du bain sur les côtés ou par le fond. De préférence, le prélèvement est effectué de manière symétrique par rapport à l'axe longitudinal du bain de manière à ne pas perturber la trajectoire du ruban de verre qui défile sur le métal fondu.

Le prélèvement peut être effectué totalement en bout du bain ou plus en amont de cette extrémité.

Selon une variante, le métal fondu prélevé peut être réintroduit à la fois
- partiellement d'une part dans la zone la plus en amont de la masse de verre afin d'éviter la dévitrification, et
- d'autre part en au moins un second point entre l'entrée et la sortie de l'installation de flottage. Selon une variante, ce second point (en fait de préférence une paire de seconds points placés symétriquement par rapport à l'axe longitudinal du bain) se situe à la fin de la zone d'étirage du verre. Ce choix permet tout d'abord d'effectuer cette opération dans une zone faiblement encombrée puisqu'on se trouve après les derniers rouleaux de bord qui entraînent le ruban de verre par le dessus. En outre, le choix de cette zone permet de limiter l'énergie nécessaire pour augmenter la température du métal qui dans cette zone est généralement à une température comprise entre 1200 et 800°C.

Ainsi, selon une variante, le flux de métal prélevé et réintroduit est divisé pour alimenter d'une part le point de flottage le plus en amont et situé sur l'axe longitudinal du bain, et d'autre part pour alimenter au moins un autre point de réintroduction situé entre le point précédent et le point de prélèvement.

Selon une variante de l'invention, le métal fondu est réintroduit dans le bain en ce second point (et bien entendu ce n'est pas le cas pour la zone la plus en amont) avec une vitesse quasi-nulle et de préférence de manière symétrique par rapport à l'axe longitudinal de l'installation de flottage. Selon cette variante, il est possible d'éviter ou tout au moins de limiter la création d'un nouveau courant dû au volume de métal fondu réintroduit. Le choix préférentiel d'une réintroduction symétrique permet en outre de ne pas perturber la trajectoire du ruban de verre par un apport de matière unilatéral.

L'invention propose en outre un dispositif pour la mise en oeuvre du procédé qui vient d'être présenté. Ce dispositif pour la fabrication d'un ruban de verre flotté comprend un bain de métal fondu sur lequel le ruban défile, un moyen de déversement du verre en amont du bain et un moyen de coulée de métal fondu en amont et sur l'axe longitudinal du bain.

Selon une variante, ce dispositif comporte également au moins un système de prélèvement de métal fondu et au moins une conduite reliant l'orifice de prélèvement à au moins un point ou une zone de réintroduction.

Le système de prélèvement de métal peut être un orifice dans la sole du bain de métal.

Selon une variante, le système de prélèvement de métal fondu est un trop-plein en extrémité aval du bain, au moins une conduite reliant le système de trop-plein à au moins un point ou une zone de réintroduction.

Le système de trop-plein peut être constitué d'une cuve ou réserve accolée au bain et reliée à celui-ci par un déversoir auquel cas la conduite est extérieure au bain. Cela permet également une réintroduction du métal en au moins un second point (le premier point étant comme déjà dit la zone la plus en amont du verre flotté et sur l'axe longitudinal) avantageusement de chaque côté du bain qui est effectuée par le dessus. Avantageusement encore l'invention prévoit l'utilisation d'un dispositif du type déversoir à surface évasée qui permet un écoulement du métal réintroduit en ce second point dans le bain avec une vitesse quasi-nulle. La conduite extérieure résiste à la corrosion due au métal fondu ; il s'agit par exemple de matériau réfractaire du type zircone /alumine.

Selon une autre variante de réalisation de l'invention, un système de trop-plein et une conduite sont réalisés au sein du bain. Cette conduite peut notamment être réalisée par la présence dans le bain d'une paroi qui autorise donc un courant de retour dans le bain sans contact avec le courant de métal fondu créé par le défilement du ruban de verre.

De préférence, selon l'une, ou l'autre de ces variantes, l'invention prévoit d'associer la conduite à des éléments chauffants. Ceux-ci seront avantageusement des moyens de chauffage du type à induction, notamment dans le cas d'une conduite extérieure au bain réalisée dans un matériau réfractaire. Dans le cas d'un canal de retour prévu dans le bain, il est encore possible de prévoir des moyens de chauffage tels que des électrodes chauffant indirectement ledit canal.

Ainsi l'invention concerne également un procédé de flottage sur un bain de métal recirculant au moins partiellement d'aval en amont par au moins une canalisation extérieure, le métal prélevé en aval étant réchauffé avant sa réintroduction en amont.

L'invention prévoit encore avantageusement un système de pompage, tel qu'au moins une pompe en graphite, inséré entre le système de prélèvement et la zone et le ou les points de réintroduction. Le système de pompage va permettre une circulation du métal fondu dans la conduite telle que le niveau de métal fondu dans le bain reste constant Dans le cas de l'existence de plusieurs pompes, on peut prévoir un système de contrôle du débit de métal recirculé pour assurer la symétrie du système. Selon une variante de réalisation et notamment lorsque la conduite est d'une longueur réduite, la variation de densité du métal fondu liée au traitement thermique qu'il subit par exemple au sein de la conduite permet de conférer une vitesse au métal fondu conduisant au même résultat.

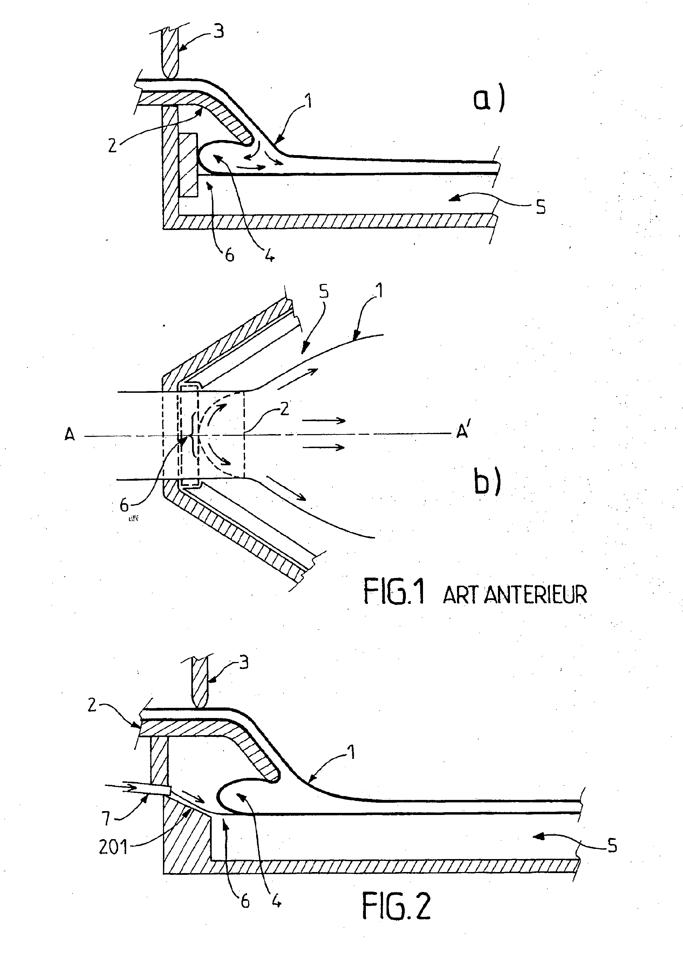

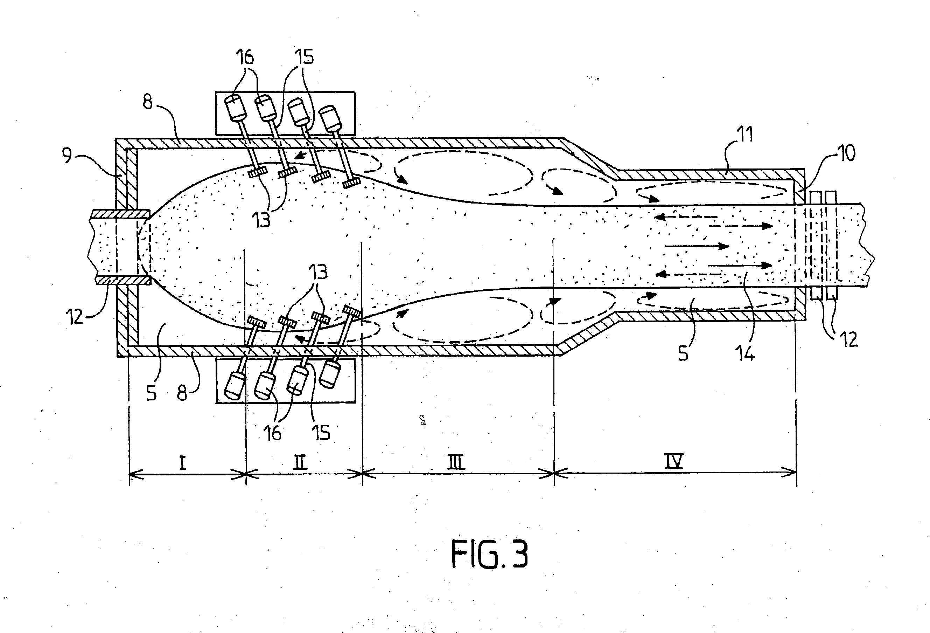

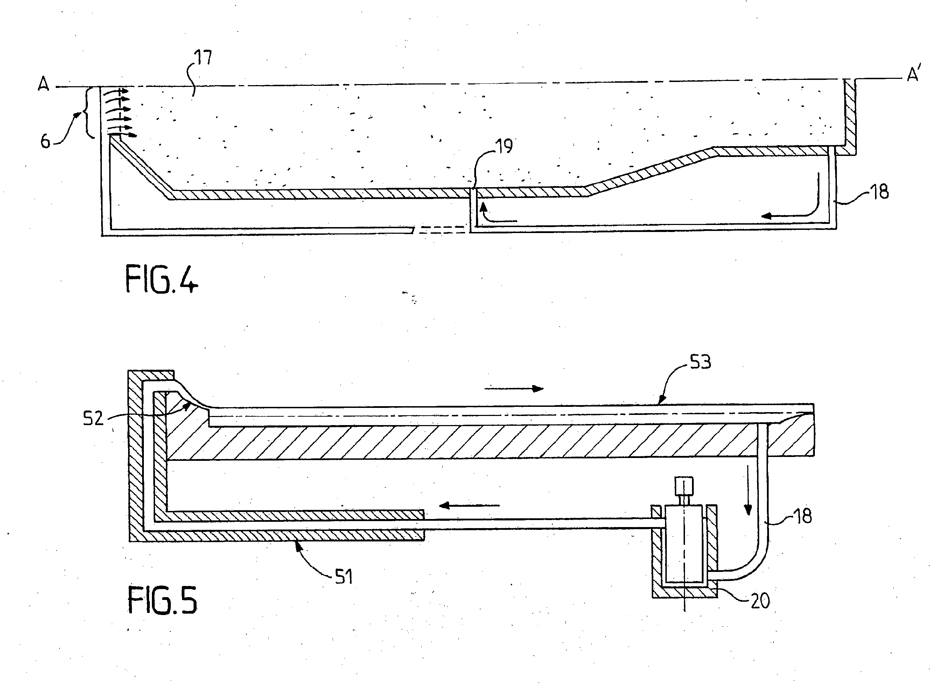

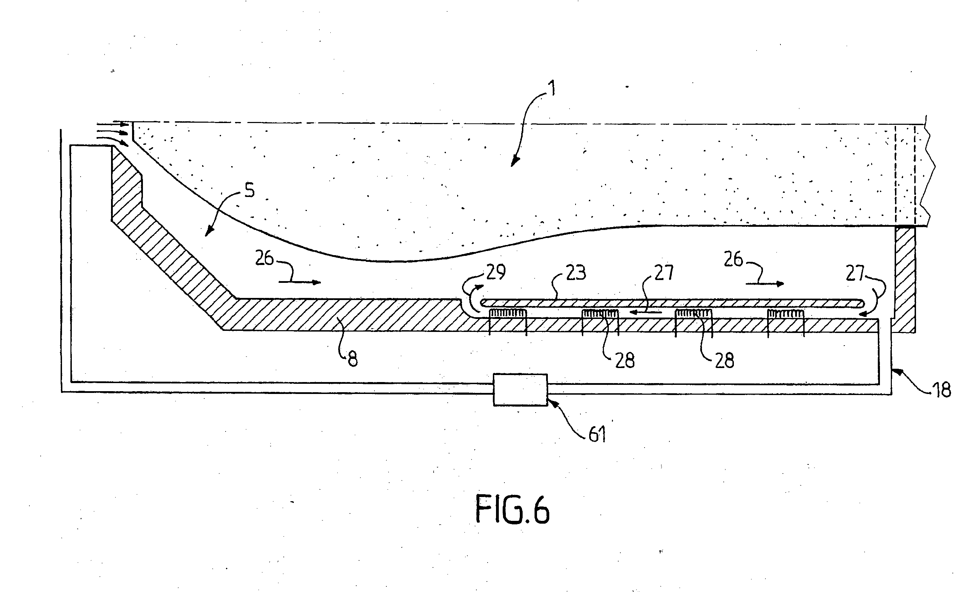

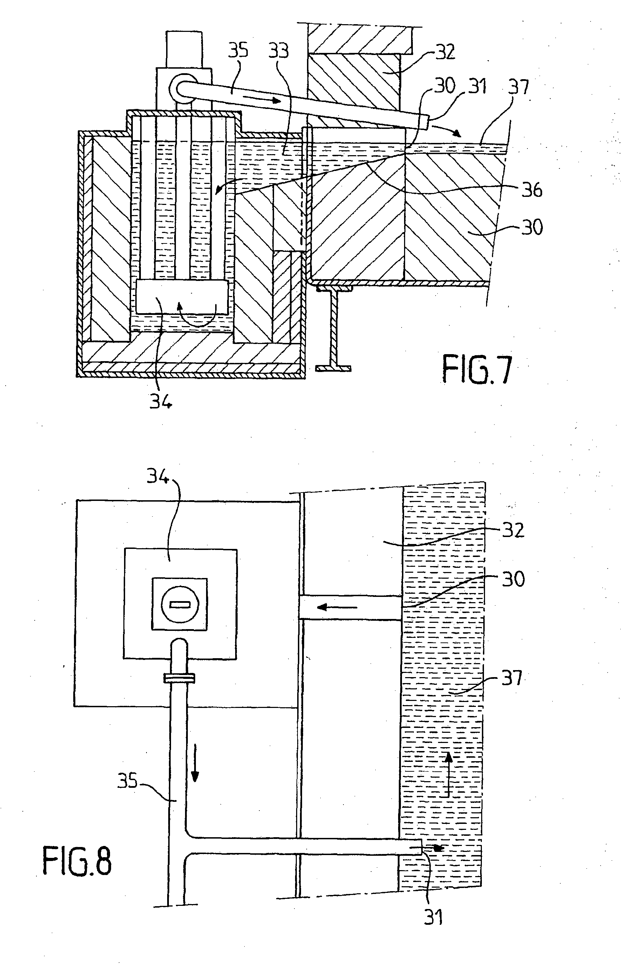

D'autres détails et caractéristiques avantageuses de l'invention ressortiront ci-après de la description d'exemples de réalisations de l'invention en référence aux figures 1 à 8 qui représentent,
↪ **figure 1****,** une vue schématique de côté (a) et du dessus (b) de la partie amont d'une cuve classique (art antérieur), comportant un bain de métal fondu pour la fabrication d'un ruban de verre par flottage;
↪ **figure 2****,** une vue schématique vue de côté du dispositif selon l'invention;
↪ **figure 3****,** une vue schématique générale du dessus d'une installation classique (art antérieur) de flottage,
↪ **figure 4****,** une vue schématique vue de dessus d'un mode de réalisation de l'invention,
↪ **figure 5****,** une vue schématique vue de côté d'une autre réalisation selon l'invention,
↪ **figure 6****,** une vue schématique vue de dessus d'un autre mode de réalisation de l'invention,
↪ **figure 7****,** une vue partielle de côté en coupe d'un schéma d'une partie d'un dispositif correspondant au cas de la figure 4,
↪ **figure 8**, une vue du dessus de la représentation de la figure 7.

Sur la figure 1, est représentée la partie amont d'une cuve allongée pour la fabrication de verre par flottage selon l'art antérieur, vue de côté (a) et vue de dessus (b). Le verre 1 coule sur une lèvre de coulée 2 (spoutlip) après réglage d'épaisseur et de tirée entre ladite lèvre et un barrage vertical 3 (front tweel), puis flotte sur le métal 5. On voit que le verre forme sous la lèvre un talon 4. Des flèches suggèrent le mouvement du verre fondu. La zone la plus en amont 6 de ce talon situé symétriquement sur l'axe longitudinal AA' est une zone de points fixes. Cette zone est située symétriquement sur l'axe AA' entre deux flux de verre allant de chaque côté de l'installation

La figure 2 représente un dispositif, selon l'invention vue de côté. Comme précédemment, Le verre coule sur une lèvre 2 après calibrage en épaisseur par un barrage 3 pour ensuite flotter sur le bain de métal 5. Un talon 4 se forme sous la lèvre de coulée 2. Selon l'invention, du métal fondu de même nature que celui du bain 5 coule en permanence en zone 6 évitant la formation de point fixe pour le verre fondu. La canalisation 7 apporte ce métal fondu que l'on fait couler sur un plan incliné 201 avant qu'il n'atteigne le bain de métal lui-même, et ce pour éviter des turbulences dans le bain de métal liquide.

La figure 3 représente une installation de flottage classique sans le dispositif particulier selon l'invention. L'invention procure une adaptation de ce type d'installation au flottage de verre du type vitrocéramique. L'invention peut donc faire appel à la même installation avec en plus une arrivée de métal fondu en zone ou au point le plus en amont et de façon symétrique par rapport à l'axe longitudinal AA' de l'installation et donc également du verre flotté. La cuve comprend des parois latérales 8 et des parois d'extrémités 9 et 10, respectivement à l'entrée et à la sortie de la cuve. La cuve, contenant un bain d'étain 5 en fusion, présente une partie avale de largeur moindre 11. Le verre fondu est déversé sur le bain à son extrémité d'entrée, à partir d'un canal de distribution 12 se finissant par la lèvre de coulée et disposé au-dessus de la paroi d'entrée de la cuve. Des régulateurs de température, non représentés sur les figures, sont incorporés au toit qui surmonte le bain. Ces régulateurs établissent le régime thermique du verre en le maintenant à l'état déformable jusqu'en fin de zone d'étirage.

Le bain comporte dans la fabrication de verre plusieurs zones représentées sur la figure 3 et que l'on peut distinguer de la façon suivante :
- une zone I d'étalement du verre à la suite de sa coulée sur le bain de métal fondu, en amont ;
- une zone Il dans laquelle le ruban de verre en formation subit des forces longitudinales et dirigées vers l'extérieur sous les actions des rouleaux extracteurs 12 et des rouleaux de bords 13. Dans cette zone, l'étirage du verre commence et celui-ci s'amincit.
- une zone III où le ruban de verre prend sa forme définitive sous l'action des rouleaux extracteurs 12.

Les zones II et III forment ensemble la zone d'étirage.
- une zone IV de consolidation où le ruban de verre figé se refroidit progressivement.

Après avoir été déversé sur le bain de métal fondu, le verre s'étale librement au maximum dans la zone I. II se forme ainsi un ruban 14 qui se déplace vers l'aval sous l'effet de la traction des rouleaux extracteurs 12 extérieurs à la cuve.

L'épaisseur désirée est ensuite obtenue par l'action combinée de la traction des rouleaux extracteurs 12 et des rouleaux de bord moletés 13, généralement en acier, légèrement obliques par rapport à la perpendiculaire à la direction d'avance du ruban. Ces rouleaux de bord sont reliés par arbre 15 à des moteurs 16 qui les entraînent généralement à des vitesses différentes selon leur position, et croissantes vers l'aval. Ces rouleaux appliquent aux bords du ruban de verre en cours de formation des forces s'opposant à un rétrécissement du ruban de verre. Le ruban de verre subit ainsi un étirage dans la zone de ces rouleaux de bord. Le ruban de verre est ensuite amené à l'épaisseur désirée par un étirage dû aux rouleaux extracteurs.

Le déplacement du ruban de verre sur le bain provoque sous le ruban un courant de métal fondu dirigé vers l'aval de la cuve et désigné par courant aval. Ce courant aval vient buter contre la face de sortie de la cuve et se réfléchit pour former un courant amont. Le courant aval est schématisé sur la figure par une flèche pleine et le courant amont est schématisé par des flèches en pointillés (dans la zone IV).

Sur la figure 4 est représentée une vue partielle de dessus d'un schéma représentant un demi-bain de métal fondu 17. Selon l'invention, une partie du métal fondu peut être prélevée à l'extrémité avale du bain et transportée par une conduite 18. Le métal est partiellement réintroduit en zone 6 sur toute une largeur en amont du bain (le flux de métal en 6 est représenté par des flèches), symétriquement par rapport à l'axe longitudinal AA' (on ne voit donc sur la figure 4 que la moitié de la largeur de réintroduction du métal fondu): Une autre zone de réintroduction peut être situées en différents points 19 du bain. L'invention prévoit en outre la possibilité d'effectuer un traitement thermique et plus précisément une élévation de la température pour amener le métal prélevé à une température plus proche de celle de la zone de réintroduction ; une telle opération permet de limiter encore les perturbations dues à des variations de température. Dans le cas de la figure 4 et d'une division en deux points 6 et 19 de réintroduction, il est possible de prévoir par exemple un traitement thermique progressif tout le long de la conduite ; selon cette réalisation la régulation thermique est adaptée pour obtenir au point 19 une température du métal fondu prélevé correspondant à la température du bain au niveau de ce point 19 de réintroduction dans le bain et le traitement thermique se poursuit, lors de l'acheminement du métal fondu restant, jusqu'au point 6 pour que la température du métal à ce point 6 corresponde à la température dans le bain au niveau de cette zone de réintroduction. Selon un autre exemple de réalisation, il est possible de ne prévoir un traitement thermique que pour le métal acheminé jusqu'au point 6, en considérant que le métal réintroduit au point 19 est à une température telle qu'elle ne perturbera pas la zone du bain de réintroduction, la différence de température étant peu importante. Les moyens de chauffage utilisés peuvent être tous moyens connus de l'homme du métier et avantageusement des moyens de chauffage par induction notamment lors de la réalisation d'une conduite 18 en un matériau réfractaire. Selon l'invention, le dispositif illustré sur cette figure 4 est avantageusement réalisé de manière symétrique sur les deux bords du bain pour que le prélèvement et la réintroduction du métal fondu ne perturbent pas la trajectoire de défilement du ruban de verre.

Il est encore possible de prévoir un dispositif de pompage telle qu'une pompe en graphite comme énoncé précédemment. Une telle pompe va permettre d'assurer l'acheminement du métal prélevé au sein de la conduite 18. Selon d'autre réalisation et plus particulièrement lorsqu'un chauffage est prévu la variation de densité du métal fondu au sein de la conduite 18 peut être suffisant pour garantir l'acheminement du métal prélevé comme il l'a également déjà été énoncé précédemment.

La figure 5, qui représente une vue partielle schématique de côté d'un bain de métal fondu, illustre un dispositif analogue au précédent selon lequel le prélèvement du métal fondu est opéré non plus par le côté du bain mais par le fond de celui-ci, au travers d'une conduite 18. Sur cette figure sont représentées une pompe 20 et un dispositif de chauffage, mais ceux-ci sont optionnels comme dans le cas de la figure 4. La pompe 20 est avantageusement prévue en début de conduite 18 et le dispositif de chauffage 51 est lui prévu à la fin de ladite conduite 18 juste avant la zone de réintroduction 6. Le métal réintroduit coule sur un plan incliné 52 avant de rejoindre le bain de métal 53.

La figure 6 illustre un autre mode de réalisation de l'invention selon lequel le métal fondu prélevé est reconduit en amont d'une part par une conduite 27 créée au sein du bain 5 par la présence d'une paroi 23, et d'autre part par une canalisation 18 ramenant du métal fondu tout en amont en zone 6 afin d'éviter la formation d'un point fixe de verre. Une pompe 61 assure la remontée du métal fondu par la canalisation 18. Sur cette figure 6, on observe tout d'abord le ruban de verre 1 qui défile sur le bain de métal fondu 5 délimité par les parois 8. Le métal fondu est entraîné par le ruban de verre qui crée un courant aval indiqué par les flèches 26. En bout de bain ce courant aval est transformé en un courant amont. Cette transformation s'opère naturellement comme expliqué précédemment par rebond sur le bout du bain et le métal fondu est canalisé dans la conduite 27 par une géométrie du fond du bain judicieusement prévue à cet effet. Sur cette figure 6 sont encore représentés des éléments chauffants tels que des éléments radiants positionnés au-dessus du bain pour reconditionner thermiquement le métal fondu prélevé et l'amener au point 29 de réintroduction, dans le bain à une température la plus proche possible de celle du bain à ce point. Comme dans le cas des réalisations précédentes, ces éléments de chauffages sont optionnels et avantageusement présents dans le cas où le point de réintroduction est très en amont. De même, il est possible d'ajouter à une telle réalisation une pompe qui serait avantageusement placée en début de conduite 27.

Les figures 7 et 8 représentent un schéma d'une installation pouvant correspondre à une réalisation selon la figure 4, c'est-à-dire à un prélèvement latéral du métal fondu. Sur ces figures, est représenté la partie avale du bain 37, le point 30 de prélèvement du métal fondu et plus en amont un point 31 de réintroduction. Dans la paroi 32 du bain est réalisé de manière accolée un dispositif de trop-plein 33. Ce dispositif 33 va naturellement recevoir le métal fondu entraîné par le ruban de verre et qui vient en butée contre l'extrémité avale du bain, puis le conduire jusqu'au niveau de la pompe 34 et enfin au sein de la conduite 35. Le dispositif de trop-plein 33 est constitué essentiellement d'un plan incliné 36 qui facilite l'entraînement du métal fondu en excès de façon à ne pas voir apparaître de courant amont au sein du bain 37. La pompe 34 est avantageusement une pompe en graphite et comme dans toutes les réalisations présentées précédemment est optionnelle. Il est encore possible de rajouter sur ce dispositif un système de chauffage également optionnel.

Au niveau du point 31 de réintroduction dans le bain 37, il est avantageusement prévu un dispositif, non représenté sur les figures, permettant de réintroduire le métal fondu avec une vitesse quasi-nulle ; il s'agit par exemple d'un déversoir à surface évasée.

La canalisation remontant le métal fondu est divisée pour alimenter le point de réintroduction 6 le plus en amont et placé sur l'axe pour éviter la formation d'un point fixe par le verre.

De la même façon que selon les autres réalisations selon l'invention, le système présenté sur les figures 7 et 8 est avantageusement réalisé de chaque côté du bain de façon notamment à ne pas perturber la trajectoire du ruban de verre et au niveau de la zone de prélèvement et au niveau de la zone de réintroduction.

Bien entendu, quelle que soit le mode de réalisation de l'invention choisi, le volume plus important créé notamment par le dispositif de circulation du métal fondu est pris en compte pour déterminer le volume global de métal fondu nécessaire pour le bon fonctionnement du dispositif de fabrication du ruban de verre par flottage.

Ces réalisations selon l'invention présentent encore d'autres avantages ; il est connu que dans le système de fabrication d'un ruban de verre par flottage, il se crée des impuretés qui se retrouvent dans la zone avale du bain et peuvent polluer la surface inférieure du ruban de verre. L'invention va permettre simultanément au prélèvement du métal fondu dans la zone avale de prélever ces impuretés et soit de les éliminer soit ensuite de les réintroduire dans le bain plus en amont, celles-ci suivant le cheminement du métal fondu prélevé. La réintroduction de ces impuretés en amont du bain et donc dans une zone plus chaude à atmosphère réduite va entraîner leur réduction et donc leur disparition. Le procédé selon l'invention permet donc en outre un traitement du métal fondu qui élimine les impuretés.

Le procédé selon l'invention présente encore l'avantage d'être de réalisation simple et de pouvoir être notamment adapté sur des installations existantes sans nécessiter d'importants travaux de mise en oeuvre.

Le ruban de verre flotté, notamment précurseur de vitrocéramique peut avoir une épaisseur allant de 1 mm à 30 mm, et plus particulièrement de 1,5 mm à 25 mm et une largeur allant de 50 à 500 cm et plus particulièrement 60 à 460 cm.

En sortant de l'installation de formage, le ruban passe dans une étenderie pour le refroidir progressivement, à la suite de quoi le ruban est découpé en panneaux comprenant deux faces principales et une tranche. Chaque face principale de ces panneau peut avoir une surface allant de 0,15 m² à 20 m². Notamment, chaque face principale peut avoir une longueur allant de 0,4 m à 6 m et une largeur allant de 0,4 m à 3,5 m.

Ces panneaux subissent ensuite le traitement thermique de céramisation spécifique à leur transformation en vitrocéramiqueA titre d'exemple, pour une vitrocéramique à base de SiO₂-Al₂O₃-Li₂O, on peut généralement réaliser le traitement de céramisation de la façon suivante:
a) élévation de la température à la vitesse de 30 à 80°C/minute jusqu'au domaine de nucléation, généralement situé au voisinage du domaine de transformation du verre ;
b) traversée de l'intervalle de nucléation (670 - 800°C) en 15 à 25 minutes;
c) élévation de la température à la vitesse de 15 à 30°C/minute jusqu'à la température du palier de céramisation généralement comprise entre 900 et 1100 °C;
d) maintien de la température du palier de céramisation pendant une durée de 10 à 25 minutes;
e) refroidissement rapide jusqu'à la température ambiante.

Au bout du cycle de céramisation, la plaque de verre comporte la phase cristalline caractéristique de la structure vitrocéramique.

L'invention concerne également un procédé de préparation d'une vitrocéramique plane comprenant le procédé de flottage selon l'invention sans point fixe, menant à un verre plan, lequel subit ensuite un traitement de céramisation menant à ladite vitrocéramique plane.

L'invention concerne également le dispositif de mise en oeuvre du procédé qui a été décrit et plus particulièrement un dispositif pour la fabrication d'un ruban de verre flotté, selon lequel le ruban défile sur un bain de métal fondu, caractérisé en ce qu'il comprend un moyen d'introduction de métal fondu sensiblement au point le plus en amont du verre flotté et situé sur l'axe longitudinal du bain. Le moyen d'introduction est de préférence tel que le métal fondu est en mouvement au point de rencontre avec le bain de métal. Plus particulièrement, le moyen d'introduction peut comprendre un plan incliné de matière réfractaire, ledit plan incliné aboutissant au bain de métal, de sorte que le métal fondu à introduire coule d'abord sur le plan incliné avant de se déverser dans le bain. Notamment, le dispositif peut comprendre au moins une canalisation alimenté par du métal prélevé du bain et remontant ledit métal prélevé au point le plus en amont du verre et situé sur l'axe longitudinal du bain. Il peut également comprendre au moins un système de trop-plein en extrémité aval du bain pour prélever du métal fondu et relié à la canalisation. Le système de trop-plein peut être une cuve accolée au bain et reliée à celui-ci par un déversoir la conduite étant extérieure au bain. De préférence, le soutirage et la réintroduction du métal fondu est réalisé de manière symétrique par rapport à l'axe longitudinal de l'installation de flottage.

L'invention permet l'obtention d' une plaque (plane) de vitrocéramique dont au moins une dimension (largeur ou longueur) est supérieure à 75 cm , et même supérieur à 80 cm et même supérieur à 100 cm et même supérieur à 200 cm, généralement inférieure à 600 cm. Notamment, la plaque peut être fine, c'est-à-dire d'épaisseur inférieure à 3 mm et même d'épaisseur inférieure à 2,5 mm, voire inférieure à 2 mm, par ailleurs généralement d'épaisseur supérieure à 0,8 mm.

Tout type de verre précurseur de vitrocéramique peut être mis en oeuvre selon l'invention, y compris ceux comprenant plus de 1,5% de ZnO et même plus de 1,6% en poids de ZnO.

Il est bien entendu que cette invention décrite plus particulièrement pour fabriquer de la vitrocéramique s'applique aussi pour du verre de type non-vitrocéramique. Il est bien entendu également que la recirculation du métal du bain de flottage peut être pratiquée indépendamment de la réintroduction en tête du bain de flottage. La recirculation du métal fondu (généralement sur base d'étain) est plus particulièrement décrite en relation avec la fabrication de verre pour vitrocéramique et autres verres sensibles à la cristallisation, mais ce procédé de recirculation est aussi applicable à toute enceinte de flottage, quel que soit le verre fabriqué, de façon à bénéficier des avantages autres que celui évitant une cristallisation.

## Revendications

1. Procédé pour la fabrication de verre plat comprenant le flottage en continu d'un verre fondu (1) sur un bain de métal fondu (5) dans une installation de flottage, ledit verre étant déversé à l'état fondu sur le métal fondu et formant progressivement un ruban (14) défilant sur ledit bain de métal, **caractérisé en ce que** le verre ne présente aucun point fixe dans l'installation, du métal fondu étant introduit dans l'installation de façon à ce qu'il constitue une zone de réception (6) en mouvement pour le verre fondu.

2. Procédé selon la revendication précédente, **caractérisé en ce que** le verre flottant sur le bain de métal fondu est un verre précurseur de vitrocéramique.

3. Procédé selon l'une des revendications précédentes, **caractérisé en ce que** du métal fondu est introduit aux points de flottage qui seraient fixes pour le verre en l'absence d'introduction.

4. Procédé selon l'une des revendications précédentes, **caractérisé en ce que** du métal fondu est introduit au point de flottage le plus en amont et situé sur l'axe longitudinal du bain.

5. Procédé selon l'une des revendications précédentes, **caractérisé en ce que** du métal fondu est introduit en continu au point de flottage du verre le plus amont et situé sur l'axe longitudinale du bain.

6. Procédé selon l'une des revendications précédentes, **caractérisé en ce que** le métal fondu introduit provient au moins partiellement d'un point de prélèvement du même bain situé plus en aval.

7. Procédé selon la revendication précédente, **caractérisé en ce que** le flux de métal prélevé et réintroduit est divisé pour alimenter d'une part le point de flottage le plus en amont et situé sur l'axe longitudinal du bain, et d'autre part pour alimenter au moins un autre point de réintroduction situé entre le point précédent et le point de prélèvement.

8. Procédé selon l'une des deux revendications précédentes, **caractérisé en ce que** le métal prélevé est réchauffé avant sa réintroduction.

9. Procédé selon l'une des revendications 6 à la revendication précédente, **caractérisé en ce que** le prélèvement du métal fondu est effectué sur les parties latérales du bain de métal fondu et de manière symétrique par rapport à son axe longitudinal.

10. Procédé selon l'une des revendications 6 à la revendication précédente, **caractérisé en ce que** la réintroduction du métal fond est réalisée partiellement sur les parties latérales du bain avec une vitesse quasi-nulle et de manière symétrique par rapport à l'axe longitudinal.

11. Procédé de préparation d'une vitrocéramique plane comprenant le procédé de l'une des revendications précédentes menant à un verre plan, lequel subit ensuite un traitement de céramisation menant à ladite vitrocéramique plane.

12. Procédé selon l'une des revendications précédentes, **caractérisé en ce qu'**à l'endroit où le verre est déversé, sa viscosité dynamique est comprise entre 3 et 4,5 poises.

13. Procédé selon l'une des revendications précédentes, **caractérisé en ce qu'**à l'endroit où le verre est déversé, sa température est comprise entre 1300 et 1450°C.

14. Dispositif de formage de verre fondu pour la fabrication d'un ruban (14) de verre flotté comprenant une zone de coulée de verre fondu suivi d'une zone d'étirage du verre, selon lequel le ruban défile sur un bain de métal fondu, **caractérisé en ce qu'**il comprend un moyen d'introduction de métal fondu sensiblement au point le plus en amont du verre flotté et situé sur l'axe longitudinal du bain.

15. Dispositif selon la revendication précédente, **caractérisé en ce que** le moyen d'introduction est tel que le métal fondu est en mouvement au point de rencontre avec le bain de métal.

16. Dispositif selon l'une des revendications de dispositif précédentes, **caractérisé en ce qu'**il comprend un plan incliné (201) de matière réfractaire, ledit plan incliné aboutissant au bain de métal (5), de sorte que le métal fondu à introduire coule d'abord sur le plan incliné avant de se déverser dans le bain.

17. Dispositif selon la revendication précédente **caractérisé en ce qu'**il comprend au moins une canalisation (7) alimenté par du métal prélevé du bain et remontant ledit métal prélevé au point le plus en amont du verre et situé sur l'axe longitudinal du bain.

18. Dispositif selon la revendication précédente, **caractérisé en ce qu'**il comprend au moins un système de trop-plein en extrémité aval du bain pour prélever du métal fondu et relié à la canalisation.

19. Dispositif selon la revendication précédente, **caractérisé en ce que** le système de trop-plein (33) est une cuve accolée au bain et reliée à celui-ci par un déversoir et **en ce que** la conduite est extérieure au bain.

20. Dispositif selon l'une des revendications 17 à la précédente, **caractérisé en ce que** le soutirage et la réintroduction du métal est réalisée de manière symétrique par rapport à l'axe longitudinal de l'installation de flottage.

## Patentansprüche

1. Verfahren zur Herstellung von Flachglas, umfassend das fortlaufende Floaten einer Glasschmelze (1) auf einem Bad aus geschmolzenem Metall (5) in einer Floatanlage, wobei das Glas in geschmolzenem Zustand auf das geschmolzene Metall gegossen wird und schrittweise ein auf dem Metallbad laufendes Band (14) bildet, **dadurch gekennzeichnet, dass** das Glas keinerlei Festpunkt in der Anlage aufweist, wobei geschmolzenes Metall derart in die Anlage eingebracht wird, dass es einen in Bewegung befindlichen Aufnahmebereich (6) für das geschmolzene Glas bildet.

2. Verfahren nach dem vorhergehenden Anspruch, **dadurch gekennzeichnet, dass** das auf dem Bad aus geschmolzenem Metall schwimmende Glas ein Glaskeramik-Vorläuferglas ist.

3. Verfahren nach einem der vorhergehenden Ansprüche, **dadurch gekennzeichnet, dass** geschmolzenes Metall an den Floatstellen eingeleitet wird, die bei nicht stattfindendem Einleiten für das Glas fest wären.

4. Verfahren nach einem der vorhergehenden Ansprüche, **dadurch gekennzeichnet, dass** geschmolzenes Metall an der Floatstelle eingeleitet wird, die am weitesten stromaufwärts und auf der Längsachse des Bades gelegen ist.

5. Verfahren nach einem der vorhergehenden Ansprüche, **dadurch gekennzeichnet, dass** geschmolzenes Metall an der Floatstelle des Glases, die am weitesten stromaufwärts und auf der Längsachse des Bades gelegen ist, fortlaufend eingeleitet wird.

6. Verfahren nach einem der vorhergehenden Ansprüche, **dadurch gekennzeichnet, dass** das eingeleitete geschmolzene Metall wenigstens teilweise von einer weiter stromabwärts gelegenen Entnahmestelle des gleichen Bades stammt.

7. Verfahren nach dem vorhergehenden Anspruch, **dadurch gekennzeichnet, dass** der entnommene und wiedereingeleitete Metallstrom geteilt wird, um einerseits die am weitesten stromaufwärts und auf der Längsachse des Bades gelegene Floatstelle zu beaufschlagen und um andererseits wenigstens eine weitere Wiedereinleitungsstelle, die zwischen der vorhergehenden Stelle und der Entnahmestelle gelegen ist, zu beaufschlagen.

8. Verfahren nach einem der beiden vorhergehenden Ansprüche, **dadurch gekennzeichnet, dass** das entnommene Metall vor seinem Wiedereinleiten erhitzt wird.

9. Verfahren nach einem der Ansprüche 6 bis zum vorhergehenden Anspruch, **dadurch gekennzeichnet, dass** die Entnahme des geschmolzenen Metalls an den Seitenteilen des Bades aus geschmolzenem Metall sowie symmetrisch zu seiner Längsachse vollzogen wird.

10. Verfahren nach einem der Ansprüche 6 bis zum vorhergehenden Anspruch, **dadurch gekennzeichnet, dass** das Wiedereinleiten des geschmolzenen Metalls teilweise an den Seitenteilen des Bades mit einer Geschwindigkeit quasi null sowie symmetrisch zu der Längsachse vollzogen wird.

11. Verfahren zur Herstellung einer flachen Glaskeramik, umfassend das Verfahren von einem der vorhergehenden Ansprüche, das zu einem Flachglas führt, welches anschließend einer Keramisierungsbehandlung, die zu der flachen Glaskeramik führt, unterzogen wird.

12. Verfahren nach einem der vorhergehenden Ansprüche, **dadurch gekennzeichnet, dass** an der Stelle, an der das Glas ausgeschüttet wird, seine dynamische Viskosität im Bereich zwischen 3 und 4,5 Poise liegt.

13. Verfahren nach einem der vorhergehenden Ansprüche, **dadurch gekennzeichnet, dass** an der Stelle, an der das Glas ausgeschüttet wird, seine Temperatur im Bereich zwischen 1300 und 1450 °C liegt.

14. Vorrichtung zum Formen von geschmolzenem Glas, für die Herstellung eines Bandes (14) von Floatglas, umfassend einen Bereich zum Gießen von geschmolzenem Glas, an den sich ein Bereich zum Ziehen des Glases anschließt, wonach das Band auf einem Bad aus geschmolzenem Metall läuft, **dadurch gekennzeichnet, dass** sie ein Mittel zum Einleiten von geschmolzenem Metall im Wesentlichen an der Stelle, die am weitesten stromaufwärts des Floatglases und auf der Längsachse des Bades gelegen ist, umfasst.

15. Vorrichtung nach dem vorhergehenden Anspruch, **dadurch gekennzeichnet, dass** das Einleitungsmittel derart ist, dass das geschmolzene Metall an dem Treffpunkt mit dem Metallbad in Bewegung ist.

16. Vorrichtung nach einem der vorhergehenden Vorrichtungsansprüche, **dadurch gekennzeichnet, dass** sie eine geneigte Ebene (201) aus feuerfestem Material umfasst, wobei die geneigte Ebene zu dem Metallbad (5) führt, so dass das einzuleitende geschmolzene Metall zunächst über die geneigte Ebene läuft, bevor es sich in das Bad ergießt.

17. Vorrichtung nach dem vorhergehenden Anspruch, **dadurch gekennzeichnet, dass** sie wenigstens eine Rohrleitung (7) umfasst, die mit aus dem Bad entnommenem Metall gespeist wird und das entnommene Metall an die Stelle, die am weitesten stromaufwärts des Glases und auf der Längsachse des Bades gelegen ist, hinaufbringt.

18. Vorrichtung nach dem vorhergehenden Anspruch, **dadurch gekennzeichnet, dass** sie wenigstens ein Überlaufsystem am stromabwärtigen Ende des Bades zum Entnehmen von geschmolzenem Metall und mit der Rohrleitung verbunden umfasst.

19. Vorrichtung nach dem vorhergehenden Anspruch, **dadurch gekennzeichnet, dass** das Überlaufsystem (33) eine Wanne ist, die an das Bad angeschlossen und mit diesem über einen Überlauf verbunden ist und dass die Leitung außerhalb des Bades gelegen ist.

20. Vorrichtung nach einem der Ansprüche 17 bis zum vorhergehenden, **dadurch gekennzeichnet, dass** die Entnahme und die Wiedereinleitung des Metalls symmetrisch zu der Längsachse der Floatanlage vollzogen wird.

## Claims

1. Method for the production of flat glass comprising the continuous floating of a molten glass (1) on a float bath (5) in a float installation, the said glass being poured in the molten state onto the molten metal and progressively forming a ribbon (14)running on the said float bath, **characterized in that** the glass has no stationary point in the installation, molten metal being introduced into the installation so that it forms a moving reception zone (6) for the molten glass.

2. Method according to the preceding claim, **characterized in that** the glass floating on the float bath is a glass-ceramic precursor glass.

3. Method according to one of the preceding claims, **characterized in that** the molten metal is introduced at the float points that would be fixed for the glass if there were no introduction.

4. Method according to one of the preceding claims, **characterized in that** the molten metal is introduced at the float point furthest upstream and situated on the longitudinal axis of the bath.

5. Method according to one of the preceding claims, **characterized in that** the molten metal is introduced continuously at the float point of the glass furthest upstream and situated on the longitudinal axis of the bath.

6. Method according to one of Claims 3 to the preceding claim **characterized in that** the molten metal introduced originates at least partially from a tapping point of the same bath situated further downstream.

7. Method according to the preceding claim, **characterized in that** the flow of tapped and reintroduced metal is divided, on the one hand, to supply the float point furthest upstream and situated on the longitudinal axis of the bath, and, on the other hand, to supply at least one other reintroduction point situated between the preceding point and the tapping point.

8. Method according to one of the two preceding claims, **characterized in that** the tapped metal is reheated before it is reintroduced.

9. Method according to one of Claims 6 to the preceding claim, **characterized in that** the molten metal is tapped off from the lateral portions of the float bath and in a symmetrical manner relative to its longitudinal axis.

10. Method according to one of Claims 6 to the preceding claim, **characterized in that** the molten metal is reintroduced partially on the lateral portions of the bath with a virtually zero speed and in a symmetrical manner relative to the longitudinal axis.

11. Method of preparing a flat glass-ceramic comprising the method of one of the preceding claims leading to a flat glass, which then undergoes a ceramization process leading to the said flat glass-ceramic.

12. Method according to one of the preceding claims, **characterized in that**, at the location where the glass is poured, its dynamic viscosity lies between 3 and 4.5 poise.

13. Method according to one of the preceding claims, **characterized in that**, at the location where the glass is poured, its temperature lies between 1300 and 1450°C.

14. Device for the production of a ribbon (14) of float glass, according to which the ribbon runs on a float bath, **characterized in that** it comprises a means of introducing molten metal substantially at the point furthest upstream of the floated glass and situated on the longitudinal axis of the bath.

15. Device according to the preceding claim, **characterized in that** the introduction means is such that the molten metal is in motion at the point of meeting with the float bath.

16. Device according to one of the preceding device claims, **characterized in that** it comprises an inclined plane (201) of refractory material, the said inclined plane ending at the float bath (5), such that the molten metal to be introduced first runs onto the inclined plane before pouring into the bath.

17. Device according to the preceding claim, **characterized in that** it comprises at least one duct (7) supplied with metal tapped from the bath and returning the said tapped metal to the point furthest upstream of the glass and situated on the longitudinal axis of the bath.

18. Device according to the preceding claim, **characterized in that** it comprises at least one overflow system at the downstream end of the bath to tap off molten metal and connected to the duct.

19. Device according to the preceding claim, **characterized in that** the overflow system (33) is a tank close-coupled to the bath and connected thereto by a spillway and **in that** the pipe is outside the bath.

20. Device according to one of Claims 17 to the preceding claim, **characterized in that** the metal is withdrawn and reintroduced in a symmetrical manner relative to the longitudinal axis of the float installation.
